# EUROPÄISCHE PATENTSCHRIFT

(11) **EP 3 762 913 B1**
(45) Veröffentlichungstag und Bekanntmachung des Hinweises auf die Patenterteilung: **30.04.2025**
(21) Anmeldenummer: 19709449.3
(22) Anmeldetag: 05.03.2019
(51) Int. Cl.: G08G 5/00, G01S 5/00, G01S 13/93, G01S 13/91, G01S 13/933

(54) **LUFTLAGEINFORMATIONS- UND VERKEHRSMANAGEMENTSYSTEM FÜR UNBEMANNTE UND BEMANNTE LUFTFAHRZEUGE**
AIR POSITION INFORMATION- AND TRAFFIC MANAGEMENT SYSTEM FOR UNMANNED AND MANNED AIRCRAFT
SYSTÈME DE GESTION D'INFORMATIONS DE SITUATION AÉRIENNE ET DE TRAFIC POUR VÉHICULES AÉRIENS SANS PILOTE ET PILOTÉS

(30) Priorität: 06.03.2018 DE 102018105045
(43) Veröffentlichungstag der Anmeldung: 13.01.2021
(73) Patentinhaber: DFS Deutsche Flugsicherung GmbH, 63225 Langen (DE)
(72) Erfinder: HEIDGER, Ralf, 65199 Wiesbaden (DE)
(74) Vertreter: Keil & Schaafhausen Patentanwälte PartGmbB
(86) Internationale Anmeldenummer: PCT/EP2019/055407
(87) Internationale Veröffentlichungsnummer: WO 2019/170649

(56) Entgegenhaltungen:
- EP-A1- 2 458 399
- EP-A2- 2 138 921
- DE-A1- 19 826 737
- US-A1- 2006 253 254
- US-A1- 2017 045 884
- US-B1- 8 792 905
- RAMASAMY SUBRAMANIAN ET AL: "A unified approach to cooperative and non-cooperative Sense-and-Avoid", 2015 INTERNATIONAL CONFERENCE ON UNMANNED AIRCRAFT SYSTEMS (ICUAS), IEEE, 9 June 2015 (2015-06-09), pages 765 - 773, XP033171579, DOI: 10.1109/ICUAS.2015.7152360
- CHO TAEHWAN: "Automatic Dependent Surveillance - Broadcast for surveillance of Unmanned Aircraft System", 2017 INTEGRATED COMMUNICATIONS, NAVIGATION AND SURVEILLANCE CONFERENCE (ICNS), IEEE, 18 April 2017 (2017-04-18), XP033143166, DOI: 10.1109/ICNSURV.2017.8011925

## Beschreibung

Die Erfindung beschreibt ein Luftlageinformations- und Verkehrsmanagementsystem für unbemannte und bemannte Luftfahrzeuge (eine Variante des UTM-Systems konstituierend) nach dem Oberbegriff des Anspruchs 1, bei dem mittels ATM-Sensoren des Luftlageinformations- und Verkehrsmanagementsystems die Positionsdaten von mittels ATM-Sensoren erfassbaren (insbesondere bemannten) Luftfahrzeugen erfasst, nachverfolgt (getrackt) und in einem Luftlagebild dargestellt werden, sowie mittels weiterer nachfolgend dargestellter Komponenten, die Positionsdaten von unbemannten Luftfahrzeugen ebenfalls erfasst, verfolgt und dargestellt werden. Das Luftlagebild gibt bspw. einer Flugsicherung oder einem Lotsen eine Übersicht über den Luftraum insbesondere der bemannten Luftfahrzeuge. ATM-Sensoren als Air-Traffic-Management-Sensoren sind ortsfeste Sensoren, die Flugobjekte im Luftraum erkennen und lokalisieren und bspw. durch eine Flugsicherung betriebenen werden. Als ortsfeste Sensoren sind die ATM-Sensoren insbesondere keine an dem Flugzeug festgelegten oder mit diesem mitbewegte Sensoren. ATM-Sensoren können insbesondere Radarsensoren sein. Die ATM-Sensoren sind mit einem Datennetzwerk (insbesondere einer Flugsicherung oder einer anderen zentralen Auswerteeinheit) verbunden und stellen die von ihnen ermittelten Positionsdaten in das Datennetzwerk ein. In dem Datennetzwerk ist eine Tracking-Einrichtung vorgesehen und dazu eingerichtet, die erfassten Positionsdaten nachzuverfolgen und als Luftlagebild aufzubereiten, so dass das Luftlagebild an einer mit dem Datennetzwerk verbindbaren Anzeigeeinrichtung darstellbar ist.

In der EP 2 138 921 A2 sind ein System und Verfahren zum Übertragen von Positionsdaten eines nicht bemannten Luftfahrzeugs (UAV) an ein zentrales Flugkontrollzentrum beschrieben, wobei das UAV einen Positionssensor zum Erfassen der Position, bspw. einen GPS-Sensor, und einen Sende-Empfänger aufweist, über den das UAV mit einer Bodensteuerungsstation (GCS) mit entsprechenden Sende-Empfänger kommuniziert. Die GCS steuert die Flugbewegungen des UAV und erhält von dem UAV die Positionsdaten des Positionssensors, die es an das zentrale Flugkontrollzentrum weiterleitet. Das zentrale Flugkontrollzentrum erhält auch Positionsdaten von normalen Flugzeugen, die dafür einen eigenen Transponder aufweisen, der die Daten zusammen mit einer Flugzeugkennung direkt an das zentrale Flugkontrollzentrum senden. In der GCS können die Positionen von UAV und Flugzeug gemeinsam angezeigt werden.

Die US 2006/0253254 A1 beschreibt ein Sense-and-Avoid Sicherheitssystem zur Darstellung von Flugzeugpositionen in einem lokalen Flugmanagement-Autopilot-System eines unbemannten Luftfahrzeugs (UAV). Dazu werden Daten von einen bodenbasierten kurzreichweitigen Tracking-Radarsystem und Positionsdaten eines GPS-Systems des UAV in das lokale Flugmanagement-Autopilot-System eingebunden. Die bodenbasierten Radardaten werden über Funksignale an das Flugmanagement-Autopilot-System des UAV übertragen und dort auf einem Display zusammen mit den GPS-Positionsdaten des UAV dargestellt in georeferenzierten Karten, in denen ein Tracking des UAV für den Piloten des UAV möglich ist. Dem Piloten des UAV werden auch Warnhinweise gegeben, die es ihm ermöglichen, eine Kollision mit einem Flugzeug in der Nähe des UAV zu vermeiden.

In RAMASAMY SUBRAMANIAN ET AL: "A unified approach to cooperative and non-cooperative Sense-and-Avoid", 2015 INTERNATIONAL CONFERENCE ON UNMANNED AIRCRAFT SYSTEMS (ICUAS), IEEE, 9. Juni 2015 (2015-06-09), Seiten 765-773, XP033171579, und CHO TAEHWAN: "Automatic Dependent Surveillance - Broadcast for surveillance of Unmanned Aircraft System", 1 2017 INTEGRATED COMMUNICATIONS, NAVIGATION AND SURVEILLANCE CONFERENCE (ICNS), IEEE, 18. April 2017, (2017-04-18), XP033143166 wird bei Verwendung IMM (Interactive Mulitle Model) Kalman Filter für das Tracking unterschiedliche Flugobjekte beschrieben, wobei in RAMASAMY SUBRAMANIAN ET AL auch für Drohnen als unbemannte Flugobjekte Ellipsen zur Abschätzung der Bewegung zugrunde gelegt werden.

Eine derartige Luftraumüberwachung kommt bei der Überwachung bemannter Luftfahrzeuge zum Einsatz, wobei als bemannte Luftfahrzeuge solche Luftfahrzeuge gelten, die durch einen Piloten in dem Luftfahrzeug selbst gesteuert werden, wie bspw. Flugzeuge und Helikopter. Unbemannte Luftfahrzeuge bzw. Flugobjekte sind dagegen Luftfahrzeuge, bei denen kein Pilot mitfliegt, mit denen bspw. auch Passagiere mitfliegen können (bspw. ferngesteuerte Drohnen und auch Drohnen-Taxis). Diese unbemannten Luftfahrzeuge können durch die eingesetzten ATM-Sensoren nicht oder nicht zuverlässig lokalisiert werden. Ähnliches gilt für bemannte Luftfahrzeuge, wie bspw. kleine Sportflugzeuge oder Leichtkraftflugzeuge, die sich im unteren Luftraum bewegen. Trotzdem kommt es, insbesondere in Flughafennähe, immer wieder zu Berührungspunkten zwischen nicht überwachten Luftfahrzeugen und überwachten Luftfahrzeugen.

Vor diesem Hintergrund liegt die Aufgabe der Erfindung darin, im Rahmen eines Luftlageinformations- und Verkehrsmanagementsystems ein gemeinsames Luftlagebild für bemannte und unbemannte Luftfahrzeuge (gemeint in dem Sinne von durch ATM-Sensoren erfassbare und nicht durch ATM-Sensoren erfassbare Luftfahrzeuge) zur Verfügung zu stellen, um mögliche Berührungspunkte von solchen unbemannten Luftfahrzeugen mit bemannten Luftfahrzeugen systematisch bei einem Verkehrsmanagement berücksichtigen zu können.

Diese Aufgabe wird erfindungsgemäß durch ein Luftlageinformations- und Verkehrsmanagementsystem der eingangs genannten Art mit den Merkmalen des Anspruchs 1 gelöst. Dabei ist insbesondere vorgesehen, dass nicht mittels ATM-Sensoren erfassbare Luftfahrzeuge (dies sind insbesondere unbemannte, d.h. nicht durch einen Piloten im Luftfahrzeug gesteuerte, Flugobjekte wie bspw. Drohnen, oder von nicht erfassten bemannten Flugobjekten im unteren Luftraum, der bspw. nicht mittels der Radar-ATM-Sensoren abgetastet werden kann) mit einem portablen Positionssensorgerät des Luftlageinformations- und Verkehrsmanagementsystems ausgestattet sind, wobei das portable Positionssensorgerät dazu eingerichtet ist, aktuelle Positionsdaten zu erfassen. Vorteilhafte Ausgestaltungen dieser erfindungsgemäß vorgeschlagenen Positionssensorgeräte sind sogenannte Hook-in, Hook-on oder Carry-on Devices, die nachstehend noch genauer erläutert werden. Das erfindungsgemäß vorgeschlagene Positionssensorgerät weist eine Funkkommunikationseinrichtung auf, die dazu eingerichtet ist, mit einer an das Datennetzwerk angeschlossenen Bodenstation zu kommunizieren und die Positionsdaten des Positionssensorgeräts in das Datennetzwerk einzustellen. Die Tracking-Einrichtung des Luftlageinformations- und Verkehrsmanagementsystem ist dazu eingerichtet, auch die Positionsdaten der portablen Positionssensorgeräte nachzuverfolgen und als Luftlagebild aufzubereiten, so dass das Luftlagebild an einer mit dem Datennetzwerk verbindbaren Anzeigeeinrichtung darstellbar ist.

Die Erfindung erweitert damit das bekannte Verfahren zur Erfassung, zum Tracking und zur Darstellung von Positionen bemannter Flugobjekte aus Radardaten auf die Erfassung von unbemannten Flugobjekten (im Rahmen dieser Offenbarung synonym mit unbemannten Luftfahrzeugen verwendet) aus Positionsdaten, die in einer bevorzugten Ausführung der Erfindung über eine Mobilfunkinfrastruktur in einem Datennetzwerk bereitgestellt werden, und führt diese einer gemeinsamen Luftlage-Darstellung zu. Das neue Luftlageinformations- und Verkehrsmanagementsystem dient damit zum integrierten Management von bemannten und unbemannten Luftfahrzeugen, um auch insbesondere Kollisionen untereinander zu vermeiden bzw. um Flugsicherungszwecke zu gewährleisten.

Erfindungsgemäß ist die Tracking-Einrichtung dazu eingerichtet, die Positionsdaten der ATM-Sensoren und die Positionsdaten der portablen Positionssensorgeräte zusammenzuführen und ein (bspw. jeweils dynamisch, d.h. mit neu in das Datennetzwerk eingestellten Positionsdaten aktualisiertes) gemeinsames Luftlagebild für durch ATM-Sensoren erfassbare und durch ATM-Sensoren nicht erfassbare Luftfahrzeuge (insbesondere also bemannte und nicht bemannte Luftfahrzeuge) zu erstellen.

Dabei kann vorgesehen sein, dass ein Luftlagebild oder verschiedene, ggf. auch inhaltlich verschieden aufbereitete Luftlagebilder an einer Anzeigeeinreichung darstellbar sind, wobei die Anzeigeeinrichtung in das Datennetzwerk integriert ist oder mit Hilfe eines Darstellungsservers in dem Datennetzwerk auf bspw. Internet-basierten (mobilen oder stationären) Darstellungsclients darstellbar sind, die sich mit dem Darstellungsserver verbinden. Auch die Darstellung in dem in das Datennetzwerk integrierten Anzeigeeinrichtung kann auf einem Internet-basierten Darstellungsclient erfolgen.

Derartige Anzeigeeinrichtungen können in Lotsenarbeitsplätze integriert sein, in mobile und von dem Piloten in einem Luftfahrzeug oder einem fernsteuernden Piloten außerhalb eines Luftfahrzeugs mitgeführte Anzeigegeräte (bspw. Smartphones oder Tablets) integriert sein oder als Analysedisplay für einen Wartungsingenieur zur Inspektion der Mess- und Trackingqualität ausgebildet sein.

Bei der Integration und Aufbereitung der unterschiedlichen Positionsdaten und der Darstellung der Flugbahnen in Luftlagebildern werden erfindungsgemäß Erwartungsfenster bezüglich des projizierten Flugweges in Bezug auf die Flugdynamik des Flugobjektes berücksichtigt. Diese Erwartungsfenster werden bei typischerweise dynamisch trägen bemannten Flugobjekten in der mathematischen Form einer Ellipse dargestellt, weil die Hauptbewegungsrichtung bei diesen bemannten Flugobjekten nicht spontan änderbar ist. Bei typischerweise dynamisch aktiven unbemannten Flugobjekten, wie Drohnen, werden diese Erwartungsfenster dagegen als Kreis dargestellt. Diese Formen finden bei der Berechnung der Positionsdaten und deren Aufbereitung für die Luftlagebilder Berücksichtigung.

Erfindungsgemäß können in dem Luftlagebild eine oder mehrere der nachfolgenden Informationen dargestellt werden:
- Positionen mit Lageinformationen zu Operationen bemannter und/oder unbemannter Flugobjekte (bzw. von mittels ATM-Sensoren erfassbaren und/oder von mittels ATM-Sensoren nicht erfassbaren Luftfahrzeugen). Ein erfindungsgemäß wichtiges Luftlagebild stellt das kombinierte Luftlagebild von bemannten und unbemannten (respektive mittels ATM-Sensoren erfassbaren und nicht erfassbaren Luftfahrzeugen) dar, d.h. ein Luftlagebild, in dem die auf verschiedene Weisen erfassten Positionsdaten fusioniert sind.
- Dynamisch aktualisierte, mit Labeln versehene Flugspuren (bspw. mit dem Typ des Luftfahrzeugs, einem Kennzeichen oder einer Flugnummer, der geometrischen und/oder barometrischen Höhenangabe, dem Ladezustand der Batterie eines unbemannten Luftfahrzeugs, bspw. einer Drohne, dem Steuerstatus (automatische oder manuelle Steuerung) oder dgl. Zusatzinformationen zu einem unbemannten und/oder bemannten Luftfahrzeug), wobei Punkte und/oder unterbrochene Striche in den Flugspuren den vergangenen Flugweg repräsentieren, ein Kopfsymbol die aktuelle Flugposition darstellt und ein durchgezogener Strich als Zukunftsvektor die aktuelle Richtung und Geschwindigkeit repräsentiert.
- Auf der Basis des erstellten Luftlagebildes ermittelte räumlich-zeitliche Konflikte mit statischen, dynamischen und temporären Geo-Bereichen (Geo-Fences oder Geo-Cages).
- Auf der Basis des erstellten Luftlagebildes ermittelte räumlich-zeitliche Konflikte zwischen unbemannten Luftfahrzeugen (im Sinne von Luftfahrzeugen, deren Positionsdaten nicht mittels ATM-Sensoren erfassbar sind; dazu zählen auch pilotengesteuerte Luftfahrzeuge in den unteren Lufträumen, die nicht systematisch durch bspw. Radar-ATM-Sensoren erfasst werden können) sowie zwischen bemannten und unbemannten Luftfahrzeugen (jeweils einschließlich Warnungen und/oder Alarmen bspw. zu Abständen von Luftfahrzeugen oder zu Zeitspannen bis zu möglichen Kollisionen).
- Eine frei wählbare Hintergrundkarte (bspw. topographische Karte oder dgl.), auf der die Flugbahnen bzw. Tracks oder Flugspuren darstellbar sind.
- Kontrollpositionen mit Lageinformationen zu Operationen unbemannter Flugobjekte

Gemäß einer erfindungsgemäß bevorzugten Weiterbildung können die in das Datennetzwerk eingestellten Positionsdaten weitere Surveillance-Daten zu dem Typ und/oder Status des Luftfahrzeugs umfassen, wie bspw. eine Typinformation für bemannte oder unbemannte Luftfahrzeuge, eine Flug- oder Identifikationsnummer, geometrische und/oder barometrische Höhenangabe, den Ladezustand der Batterie eines unbemannten Luftfahrzeugs, bspw. einer Drohne, den Steuerstatus (automatische oder manuelle Steuerung) oder dgl. Informationen, die erfindungsgemäß durch die Positionssensorgeräte mit erfasst und übertragen werden können oder aus dem Bordsystem des Luftfahrzeugs mit abgegriffen werden können.

Bei den nicht mittels ATM-Sensoren erfassbaren Luftfahrzeugen kann es sich insbesondere um unbemannte Flugobjekte (insbesondere Drohnen) handeln, bei denen kein Pilot mitfliegt, oder um bemannte Luftfahrzeuge in unteren Lufträumen, die durch einen Piloten gesteuert werden, aber durch ATM-Sensoren nicht systematisch erfasst werden. Letzteres betrifft insbesondere kleinere Sportflugzeuge, Leichtbau-Flugzeuge, Sportdrachen oder dgl.

Erfindungsgemäß kann zumindest ein Teil der nicht mittels ATM-Sensoren erfassbaren Luftfahrzeuge als Positionssensorgerät ein autark arbeitendes Gerät mit einer eigenen Energieversorgung aufweisen, das mit dem Luftfahrzeug eine bauliche Einheit bildet, aber kommunikationstechnisch mit dem Luftfahrzeug nicht verbunden ist. In diesem Fall sammelt das Positionssensorgerät die Positionsdaten sowie ggf. weitere Surveillance-Daten aufgrund eigener in dem Positionssensorgerät installierter Sensoren und/oder eigener Voreinstellungen. Derartige Geräte sind autark als eigenständig funktionsfähige Komponenten ausgebildet, die an dem vorzugsweise unbemannten Luftfahrzeug, bspw. einer Drohne, baulich festgelegt sind, so dass sie eine Baueinheit bilden. Bspw. können sie in das Gehäuse des Luftfahrzeugs als eigene Einheit aufgenommen oder von außen daran festgelegt sein. Diese Art von autark arbeitenden Positionssensorgeräten werden in diesem Text auch als Hook-on Devices bezeichnet.

Ferner kann erfindungsgemäß zumindest ein Teil der nicht mittels ATM-Sensoren erfassbaren Luftfahrzeuge als Positionssensorgerät ein autark arbeitendes Gerät mit einer eigenen Energieversorgung aufweisen, das als Applikation (App) in ein mobiles Endgerät mit einer Prozessor- und Kommunikationseinheit integriert und in diesem ausführbar ist. Ein solches mobiles Endgerät kann bspw. ein Smartphone, Tablet, Notebook oder dgl. Kommunikationsgerät sein, das über Sensoren für ein Globales Navigationssatellitensystem (GNSS) verfügt und auf dem eine App installiert ist, die das beschriebene Verfahren durchführt, insbesondere die Positionsdaten des Gerätes erfasst und über die Kommunikationseinheit eine Verbindung mit dem Datennetzwerk aufbaut, um die Positionsdaten in das Netzwerk einzustellen. Auch in diesem Fall erfolgt die Kommunikation üblicher Weise über eine Mobilfunkkommunikation. Diese Art von mobilen Positionssensorgeräten werden in diesem Text auch als Carry-on Devices bezeichnet. Ein wesentliches Kennzeichen des mobilen Positionssensorgeräts ist, dass bspw. der Pilot ein solches Gerät mit sich tragen und verwendenden kann, ohne dass es mit dem Flugzeug verbunden ist.

Eine weitere erfindungsgemäße Möglichkeit für das Vorsehen von Positionssensorgeräten liegt darin, dass zumindest ein Teil der nicht mittels ATM-Sensoren erfassbaren Luftfahrzeuge als Positionssensorgerät ein elektrisch und/oder elektronisch an das Bordnetz des Luftfahrzeugs anschließbares Gerät aufweisen, das mit dessen Steuerungselektronik und/oder Energieversorgung verbindbar (und im Betriebsfall verbunden) ist. Auch in diesem Fall sammelt das Positionssensorgerät die Positionsdaten sowie ggf. weitere Surveillance-Daten. Dies kann dann aufgrund eigener in dem Positionssensorgerät installierter Sensoren und/oder durch Anbindung an in dem Bordnetz vorhandene und von dem Positionssensorgerät ansprechbare Sensoren bzw. in dem Bordnetz abrufbare Daten erfolgen. Derartige Geräte sind nicht autark als eigenständig funktionsfähige Komponenten ausgebildet, sondern funktionieren nur im Zusammenhang mit einem an das Bordnetz des Luftfahrzeugs angeschlossenen Zustand, d.h. dass die Funktion des Positionssensorgeräts nur im Falle des Anschlusses an das Bordnetz des Luftfahrzeugs gewährleistet ist. Hierfür ist in dem Positionssensorgerät erfindungsgemäß eine entsprechend eingerichtete Schnittstelle mit Zugriff auf das Bordnetz vorgesehen. Derartige, in das Bordnetz des Luftfahrzeugs integrierte Positionssensorgeräte werden als Hook-in Devices bezeichnet.

Geräte, die lediglich über eine standardisierte Stromschnittstelle an eine Energieversorgung des Luftfahrzeugs zum Aufladen von Akkumulatoren anschließbar sind und sonst keinen Zugriff auf das Bordnetz haben, sind dagegen - je nach der vorherigen Definition - Hook-on Devices oder Carry-on Devices. Die Begriffe "Positionssensorgerät" und "Hook-on Device", "Hook-in Device" und "Carry-on Device" sind als synonyme Begriffe zu verstehen.

Über diese eingerichtete Schnittstelle zu einem Hook-in Device kann das Positionssensorgerät auch auf in dem Luftfahrzeug vorhandene Funkkommunikationseinrichtungen zur Übertragung der Positionsdaten zugreifen. Im Sinne der Offenbarung dieses Textes ist der Zugriff und die Verwendung der Luftfahrzeugeigenen Funkkommunikationseinrichtung auch derart zu verstehen, dass das Positionsmessgerät eine Funkkommunikationseinrichtung aufweist, selbst wenn das Positionssensorgerät keine (integrierte) Funkkommunikationseinrichtung aufweist, die Daten an das Datennetz übertragen kann, sondern auf die Funckommunikationseinrichtung des Luftfahrzeugs zugreifen muss oder zugreift.

Die Schnittstelle an das Bordnetz des Luftfahrzeugs kann kabelgebunden oder drahtlos ausgebildet sein. Als drahtlose Schnittstelle kann bspw. eine Bluetooth- oder NFC-Kommunikation dienen. Eine solche Schnittstelle kann auch von Carry-on Devices oder Hook-on Devices genutzt werden, um zusätzliche Surveillance-Daten von dem Luftfahrzeug auszulesen, selbst wenn das Positionssensorgerät insofern autark arbeitet, als es erfindungsgemäß einen in das Positionssensorgerät integrierten Positionssensor und eine in das Positionssensorgerät integrierte Funkkommunikationseinrichtung aufweist.

Das erfindungsgemäße Luftlageinformations- und Verkehrsmanagementsystem arbeitet wahlweise mit jedem Typ von Hook-in Device, Hook-on Device und/oder Carry-on Device zusammen. Der Aufbau dieser Geräte gehört nicht zum Gegenstand der Erfindung, wohl aber deren Einbindung in das durch eine Flugsicherung zur Verfügung gestellte Datennetz und die darin enthaltene Tracking-Einrichtung.

Erfindungsgemäß ist die Funkkommunikationseinrichtung eine Mobilfunkkommunikationseinrichtung. Eine solche Funkkommunikationseinrichtung kann bspw. eine Mobilfunk-
Kommunikationseinrichtung sein, die in vielen mobilen elektronischen Geräten bereits integriert ist oder als integrierbare Module für eine Vielzahl von Geräten zur Verfügung steht. Die Kommunikationsabwicklung kann dann bspw. auch über ein IoT-System (Internet of Things mit einem entsprechenden Kommunikationsprotokoll) erfolgen.

Alternativ oder ergänzend können erfindungsgemäß auch andere Funkkommunikationseinrichtungen verwendet werden, die eine Kommunikation mit dem Datennetzwerk erlauben. Diese kann bspw. in Funkfernsteuerungen von Drohnen oder von anderen unbemannten (durch einen Piloten ferngesteuerten) Luftfahrzeugen oder allgemein Flugobjekten integriert sein und bspw. über die Steuersignale des Luftfahrzeugs (bspw. in einem gesonderten Kanal) auch die Positionssignale des Luftfahrzeugs an die Funkfernsteuerung übertragen, die dann - etwa im Sinne eines Carry-on Devices - diese Daten bspw. über eine Mobilfunkverbindung in das Datennetz einstellt. In diesem Fall wird das erfindungsgemäße Positionsmessgerät gemeinsam durch die Funkfernsteuerung und Positionssensoren in dem ferngesteuerten Luftfahrzeug gebildet.

Eine alternative oder ergänzend vorgesehene Funkkommunikationseinrichtung kann ferner eine ADS-B Funkübertragung sein, bei der eine eingerichtete Broadcast-Übertragung der Positionsdaten und ggf. weiterer Daten auf der Frequenz 1090 MHz erfolgt. Von der Flugsicherung aufbereitete Daten können auch in einem Broadcastverfahren ausgesendet und in entsprechend eingerichteten Luftfahrzeugen empfangen werden. Ggf. kann auch das ähnliche Konzept "FLARM" für eine Kommunikation mit genutzt werden, das jedoch nur eine vergleichsweise kurzreichweitige Kommunikation erlaubt und eher als Kollisionswarngerät fungiert.

Gemäß einer bevorzugten Ausführungsform erlaubt die Funkkommunikationseinrichtung eine bidirektionale Kommunikation mit einer Hinkommunikation von dem Positionsmessgerät in das Datennetzwerk und einer Rückkommunikation aus dem Datennetzwerk an das Positionssensorgerät. Hin- und Rückkommunikation können erfindungsgemäß auf unterschiedlichen Funkkanälen stattfinden.

Bei einer Rückkommunikation aus dem Datennetzwerk an das Positionssensorgerät kann erfindungsgemäß auch ein Eingriff in die Flugsteuerung vorgesehen sein (insbesondere bei unbemannten Luftfahrzeugen). Dies gilt insbesondere für die vorbeschriebenen Hook-in Devices, die unmittelbar mit dem Bordsystem des Luftfahrzeugs verbunden sind, oder mittels einer Fernsteuerung, bei der in dem Fernsteuergerät auf Flugsteuerfunktionen zugegriffen werden kann.

Mittels Safety-Net-Berechnung in dem Datennetzwerk, bei der mögliche Kollisionen von Luftfahrzeugen detektiert werden und eine Ausweichkalkulation durchgeführt wird, kann so unter Verwendung des Hook-In Devices oder mit Hilfe einer Kommunikation mit einer Remote Pilot Station (Funkfernsteuerung - RPS), welche mit der Flugsteuerung des unbemannten Luftfahrzeugs verbunden ist, im Rahmen der Rückkommunikation eine automatische Steuerung des unbemannten Flugobjektes zwecks Konfliktvermeidung durch Änderung eines Segments der Flugroute erreicht bzw. gewährleistet werden.

Es entspricht einer bevorzugten Variante der Erfindung, dass das Positionssensorgerät die Positionsdaten über ein globales Navigationssatellitensystem (GNSS) ermittelt.

Grundsätzlich auch alternativ, bevorzugt aber ergänzend, kann das Positionssensorgerät die Positionsdaten aus Daten von an das Bordnetz des Luftfahrzeugs angeschlossenen Sensoren ermitteln. Dies kann bspw. über Laserscanner oder geographische Marker in virtuell hinterlegten Karten in Verbindung mit optischen Sensoren (bspw. digitale Kameras) und an sich bekannte Triangulationsverfahren zur Positionsbestimmung erfolgen.

Durch das erfindungsgemäß vorgeschlagene Luftlageinformations- und Verkehrsmanagementsystem können also Daten für eine konfliktfreie Flugmissionsplanung gegenüber Hindernissen, Flugverbotszonen, Wetterlagen und anderen geplanten Flugmissionen bereitgestellt und deren Bearbeitung durch autorisierte Stellen ermöglicht werden. Technisch kann eine Bearbeitung auch eine Flug-Priorisierung beinhalten. Ferner können aktuelle Daten für die Flugdurchführung geprüft und entsprechende Warnungen an den Piloten bereitgestellt werden, bis hin zu der Möglichkeit zum Eingriff in die Steuerung des unbemannten Flugobjektes bzw. Luftfahrzeugs.

Weitere Vorteile, Merkmale und Anwendungsmöglichkeiten ergeben sich auch aus der nachfolgenden Beschreibung von Ausführungsbeispielen und der Zeichen. Dabei bilden alle beschriebenen Merkmale für sich oder in beliebiger Kombination den Gegenstand der vorliegenden Erfindung, auch unabhängig ihrer Zusammenfassung in den Ansprüchen oder deren Rückbezügen.

Es zeigen:
- Fig. 1: eine schematische Systemübersicht eines Luftlageinformations- und Verkehrsmanagementsystems für Luftfahrzeuge nach der vorliegenden Erfindung gemäß einer ersten Ausführungsform;
- Fig. 2: beispielhaft einen Plot und eine Flugbahn, die aus Positionsdaten nachverfolgt wurden;
- Fig. 3: eine beispielhafte Darstellung von Erwartungsfenstern für bemannte und unbemannte Luftfahrzeuge;
- Fig. 4: eine bespielhafte Darstellung für ein Luftlagebild mit verschiedenen Flugbahnen; und
- Fig. 5: eine schematische Systemübersicht eines Luftlageinformations- und Verkehrsmanagementsystems für Luftfahrzeuge nach der vorliegenden Erfindung gemäß einer zweiten, ergänzten Ausführungsform.

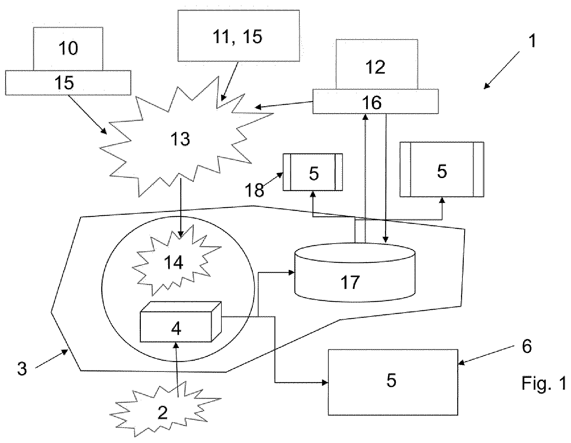

Fig. 1 zeigt ein Ausführungsbeispiel eines erfindungsgemäßen Luftlageinformations- und Verkehrsmanagementsystems 1 für Luftfahrzeuge in einer beispielhaften Ausführung mit für die Erfindung notwendigen sowie sinnvollen optionalen Bestandteilen.

Im Rahmen einer üblichen Air Traffic Control ATC einer Flugsicherung werden mittels ATM-Sensoren 2 des Luftlageinformations- und Verkehrsmanagementsystems 1 Positionsdaten von mittels ATM-Sensoren 2 erfassbaren (typischer Weise bemannten) Luftfahrzeugen erfasst. ATM-Sensoren 2 (Air-Traffic-Management-Sensoren) sind ortsfeste Sensoren, die Luftfahrzeuge im Luftraum erkennen und lokalisieren und bspw. durch eine Flugsicherung betrieben werden. ATM-Sensoren 2 können insbesondere Radarsensoren sein.

Die ATM-Sensoren 2 sind mit einem Datennetzwerk 3 (insbesondere einer Flugsicherung oder einer anderen zentralen Auswerteeinheit) verbunden und stellen die von ihnen ermittelten Positionsdaten in das Datennetzwerk 3 ein. In dem Datennetzwerk 3 ist eine Tracking-Einrichtung 4 vorgesehen und dazu eingerichtet, die erfassten Positionsdaten nachzuverfolgen und als Luftlagebild 5 aufzubereiten, so dass das Luftlagebild 5 an einen mit dem Datennetzwerk verbindbare Anzeigeeinrichtung darstellbar ist. Mit anderen Worten werden die durch die ATM-Sensoren gelieferten Positionsdaten nachverfolgt (getrackt) und in dem Luftlagebild 5 dargestellt. Das aus den Daten der ATM-Sensoren 2 ermittelte Luftlagebild 5 gibt bspw. einer Flugsicherung oder einem Lotsen eine Übersicht über den Luftraum insbesondere der bemannten Luftfahrzeuge. Dies ist soweit üblich im Rahmen der Air Traffic Control der Flugsicherungen.

Um auch unbemannte bzw. durch die ATM-Sensoren nicht erfassbare Luftfahrzeuge im Rahmen der Air Traffic Control erfassen zu können, sind diese mit portablen Positionssensorgeräten 10, 11, 12 des Luftlageinformations- und Verkehrsmanagementsystems 1 ausgestattet, wobei die portablen Positionssensorgeräte 10, 11, 12 dazu eingerichtet sind, aktuelle Positionsdaten zu erfassen. Mögliche Ausgestaltungen dieser erfindungsgemäß vorgeschlagenen Positionssensorgeräte können als sogenanntes Hook-in Device 10, Hook-on Device 11 oder Carry-on Device 12 ausgebildet sein.

Die erfindungsgemäß vorgeschlagenen Positionssensorgeräte 10, 11, 12 weisen eine Funkkommunikationseinrichtung auf, die dazu eingerichtet ist, über ein vorzugsweise als Mobilfunknetz ausgebildetes Funknetzwerk 13 mit einer an das Datennetzwerk 3 angeschlossenen Bodenstation 14 zu kommunizieren und die Positionsdaten der Positionssensorgeräte 10, 11, 12 in das Datennetzwerk 3 einzustellen. Die Tracking-Einrichtung 4 des Luftlageinformations- und Verkehrsmanagementsystems 1 ist dazu eingerichtet ist, auch die Positionsdaten der portablen Positionssensorgeräte 10, 11, 12 nachzuverfolgen und als Luftlagebild 5 aufzubereiten, so dass das Luftlagebild an einer mit dem Datennetzwerk verbindbaren Anzeigeeinrichtung 6 darstellbar ist. Die Tracking-Einrichtung 4 kann besonders bevorzugt dazu eingerichtet sein, die Positionsdaten der ATM-Sensoren 2 und die Positionsdaten der portablen Positionssensorgeräte 10, 11, 12 zusammenzuführen und ein (bspw. jeweils dynamisch, d.h. mit neu in das Datennetzwerk 3 eingestellten Positionsdaten aktualisiertes) gemeinsames Luftlagebild 5 für durch ATM-Sensoren 2 erfassbare und durch ATM-Sensoren 2 nicht erfassbare Luftfahrzeuge zu erstellen (insbesondere also bemannte Luftfahrzeuge sowie nicht bemannte Luftfahrzeuge, deren Positionsdaten durch die Positionssensorgeräte 10, 11, 12 erfasst werden).

Bei dem hier beschriebenen Ausführungsbeispiel der vorliegenden Erfindung sind unbemannte Luftfahrzeuge oder Flugobjekte, auch als Unmanned Aircraft Systems (UAS) bezeichnet, entweder mit einem sogenannten Hook-on Device als Positionssensorgerät 10 oder einem sogenannten Hook-in Device als Positionssensorgerät 10 ausgestattet. Bei den unbemannten Luftahrzeugen kann es sich insbesondere um Drohnen 15 handeln. Der Begriff "Drohne" wird im Folgenden auch als Synonym für unbemannte und/oder nicht durch ATM-Sensoren erfassbare Luftfahrzeuge verwendet.

Diese von der Drohne 15 mitgeführten bzw. integrierten Positionssensorgeräte 10, 11 werden zum Datenaustausch zwischen der Dohne 15 und einem Traffic-Management für unbemannte Flugobjekte (UTM) am Boden genutzt.

Ein Hook-on Device 10 arbeitet unabhängig von der Elektronik der Drohne 15 und hat keine Verbindung zur ihrer Flugsteuerung. Es besitzt als Positionssensor einen GNSS-Empfänger (Globales Navigationssatellitensystem), eine eigene Energieversorgung und stellt komplett autark einen Funkkontakt zur Bodenstation her. Es überträgt über Mobilfunkfrequenzen, d.h. das Mobilfunknetz 13, die Daten, die während des Fluges generiert und erfasst werden, insbesondere die Positionsdaten des GNSS-Empfängers, an die Bodenstation 14. Ebenso können per Mobilfunk auch Daten an andere Drohnen 15 übertragen werden. Dabei wird die Positionsdatenerfassung nicht, wie z.B. in der bemannten Luftfahrt mittels Radar, sondern über das Mobilfunknetz 13 und mit Hilfe von GNSS-Daten aus den Positionssensorgeräten 10, 11, 12 durchgeführt.

Bei dem sogenannten Hook-in Device 11 ist das Gerät in die Elektronik der Drohne 15 integriert und mit dessen Flugsteuerung und Energieversorgung verbunden.

Ebenso können für das in der Erfindung beschriebene Luftlageinformations- und Verkehrsmanagementsystem 1 sogenannte Carry-on Devices 12 einbezogen werden. Ein Carry-on-Device ist ein mobiles Endgerät (bspw. ein Smartphone, Tablet oder dgl.) mit einer Software-Anwendung (Applikation oder App), die einen Client zu dem UTM System darstellt und nach Login, Identifikation und Aktivierung Positionsdaten abgibt. Dies kann auch über das Mobilfunknetz 13 erfolgen. Dieses Carry-on Device 12 wird bspw. von einem Luftfahrzeug-Piloten 16 mitgeführt, der ein nicht durch ATM-Sensoren 12 erfassbares Luftfahrzeug steuert, bspw. nach Sichtflugregeln.

Diese App wird z.B. von VFR-Piloten (Visual Flight Rules, Sichtflugregeln) im Einsatz mitgeführt und kann auf einem Smartphone oder Tablet des Piloten installiert sein. Die Verwendung dieser Carry-on Devices macht so die Luftfahrzeuge mit Carry-on Devices 12 untereinander sowie relativ zu unbemannten Flugobjekten auch für den Piloten selbst sichtbar.

Die Positionsdaten werden mit Hilfe der App vom Smartphone des Piloten über das Mobilfunknetz 13 gesendet und die Bodenstation 14 und an die Tracking-Einrichtung 4 gesendet. Die vom Smartphone ermittelten GNSS-Signale werden dann zu einem Luftlagebild 5 mit anderen Luftfahrzeugen berechnet, sowohl durch ATM-Sensoren 2 erfassbare als auch nicht durch ATM-Sensoren 2 erfassbare. Mit Hilfe eines Darstellungsservers 17 (der Teil des UTM-Systems sein kann) in dem Datennetzwerk 3 kann das Luftlagebild 5 auf bspw. Internet-basierten (mobilen oder stationären) Darstellungsclients darstellbar sein, die sich mit dem Darstellungsserver 17 verbinden. Derartige Darstellungsclients können bspw. die App des Tablets oder Smartphones als mobiles Endgerät 18 des Luftfahrzeug-Piloten 16 sein und das Luftlagebild 5 übermitteln.

Ebenso kann ein fernsteuernder Pilot einer Drohne 15 dieses Luftlagebild 5 auf einem geeigneten Terminal 19 als Anzeigeeinrichtung erhalten, das bspw. ein Fernsteuergerät für die Drohne 15 oder ein mit einer geeigneten App eingerichtetes Smartphone oder Tablett sein kann. Unter Verwendung des Carry-on Devices 12 kann der Luftfahrzeug-Pilot 16, z.B. ein VFR-Pilot, welchem das Manöver des letzten Augenblicks obliegt, durch das Luftlagebild 5 auf seinem mobilen Endgerät 18 mögliche Kollisionen vermeiden.

Das in der Erfindung beschriebene Luftlageinformations- und Verkehrsmanagementsystem 1 erweitert das klassische Tracking von bemannten Luftfahrzeugen im kontrollierten Luftraum auf das Tracking und die Anzeige von unbemannten Luftfahrzeugen, wie Drohnen 15, welche sich typischerweise im Vergleich zu bemannten Luftfahrzeugen durch eine höhere Agilität bzw. kleinere Bewegungsträgheit auszeichnen. Die klassischen Verfahren mit Radar-Daten-Erfassung durch ATM-Sensoren 2 eignen sich nicht, agile Luftfahrzeuge, wie insbesondere Drohnen 15, mit schnellen Richtungsänderungen zu integrieren. Ebenso können tieffliegende unbemannte oder bemannte Luftfahrzeuge vom Radar nicht erfasst werden. Weiterhin werden unbemannte Flugobjekte ohne zusätzliche Sender nicht erfasst. Die Integration der Daten wird durch das erfindungsgemäß vorgeschlagene Luftlageinformations- und Verkehrsmanagementsystem erreicht.

Um erfindungsgemäß eine Erfassung von Drohnen 15 und dergleichen unbemannter Luftfahrzeuge und deren Integration in ein Luftlagebild 5 zu erreichen, wurde das an sich bekannte Verfahren eines Interacting Multiple Model Kalman Filters (IMM) mit der vorliegenden Erfindung zu einem Luftlageinformations- und Verkehrsmanagementsystem 1 für bemannte und unbemannte Luftfahrzeuge erweitert, das entsprechend auch als "Drone and Aircraft Surveillance Tracking System", DASTS, bezeichnet werden kann. Die für das Integrations-Verfahren notwendigen, von unbemannten Luftfahrzeugen mitgeführten Hook-on Devices 10 und Hook-in Devices 11 sowie die Carry-on Devices 12 in bemannten, aber aus sonstigen Gründen nicht durch ATM-Sensoren 2 erfassbaren Luftfahrzeugen, sind als Positionssensorgeräte 10, 11, 12 zur Erhebung von Positionsdaten damit Bestandteil des Systems.

Wie bereits beschrieben, sind solche Positionssensorgeräte 10, 11, 12 über das Mobilfunknetz 13 eines Telekommunikationsanbieters mit dem Datennetzwerk 3 der Flugsicherung verbunden bzw. wählen sich dort ein, um angeschlossene, netzwerkfähige Komponenten anzusprechen. Von den Positionssensorgeräten 10, 11, 12 erfasste Daten, insbesondere die Positionsdaten oder weitere Surveillance Daten, werden so in das Datennetzwerk 3 eingegeben, in dem diese an die Tracking-Einrichtung 4 weitergeleitet werden. Die Tracking-Einrichtung 4 benutzt die übersendeten Positionsdaten 20 der Flugobjekte, kompensiert Mess-Fehler, Zeitfehler, zeitliches Bulking (zeitliches Strecken oder voluminöser Machen) oder Lücken mittels des IMM-Filters (Erläuterung folgt später), und errechnet dann eine Track-Position zur Erzeugung eines Luftlagebildes 5, die auch als Situational Awareness bezeichnet werden kann. Damit wird eine berechnete Bewegung, bestehend aus Ziel-Kurs und Geschwindigkeit über Grund, aus den Daten-Plots der Positionssensorgeräte 10, 11, 12 erstellt.

Durch die Integration dieser Daten in den Tracks aus den Radar-Daten und ggf. sonstigen von **ATM** Sensoren 2 erfassten Surveillance Daten bemannter Flugobjekte, lassen sich ein erweitertes Kollisionsrisiko und mögliche Alarme sowie Sicherheitsabstände ermitteln. Dies erfolgt in einer Darstellung eines dynamisch aktualisierten Luftlagebildes 5 der fusionierten Daten von bemannten Luftfahrzeugen und mit Positionssensorgeräten 10, 11, 12 versehenen unbemannten Luftfahrzeugen, insbesondere Dohnen 15.

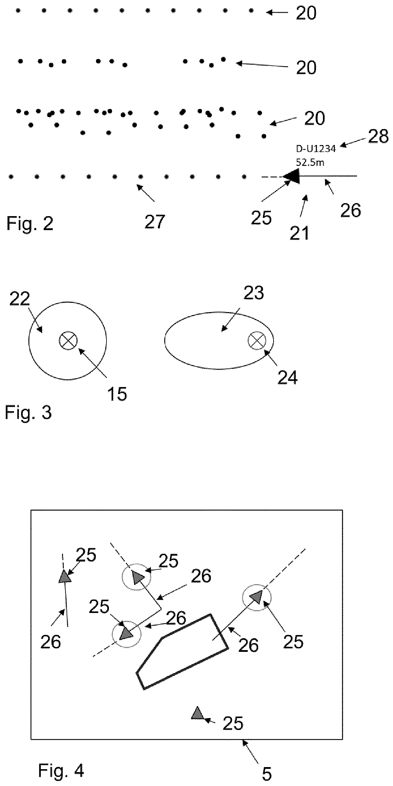

Wie in Fig. 2 dargestellt, werden die Positionsdaten 20 der ATM-Sensoren 2 und der Positionssensorgeräte 10, 11, 12 erfindungsgemäß als Plots dargestellt, in denen die zeitliche Abfolge der Positionsdaten 20 dargestellt werden, um hieraus die Flugbahn 21 (Track) des Luftfahrzeugs zu extrahieren. Die Tracking-Einrichtung 4 verfügt dabei über einen erweiterten Interacting Multiple Model Kalman Filter (IMM), der unterschiedliche Bewegungsmodelle, Kurvenflug, Geradeausflug, Stillstand, und insbesondere Bewegungsdaten höherer Dynamik - ggf. abhängig vom Datenkanal - zur Modellierung der Bewegungen unbemannter Flugobjekte verwendet.

Die Tracking-Einrichtung 4 berücksichtigt dabei in einer statistischen Risikoabschätzung insbesondere die höhere Agilität von Drohnen 15 bzw. generell unbemannten Flugobjekten, und kann entsprechend angepasste Sicherheitsabstände zuordnen, die aus Erwartungsfenstern 22, 23 ermittelt werden. So werden z.B. für typischerweise trägere bemannte Flugobjekte, wie Flugzeuge 24, längsbewegungsverzerrte Ellipsoide als Erwartungsfenster 23 in der Berechnung benutzt (vgl. Fig. 3). Bei agilen unbemannten Flugobjekten, wie z.B. Drohnen 15, werden kreisförmige Ellipsoide als Erwartungsfenster 22 verwendet. Das Luftlageinformations- und Verkehrsmanagementsystem bewertet die Flugbahnen 21 (Tracks) der einzelnen Luftfahrzeuge durch paarweisen Vergleich zueinander unter Verwendung der Erwartungsfenster 22, 23 in Kreisen und Ellipsen um die Luftfahrzeuge 15, 24, um Konfliktpotenziale anzuzeigen und Vorschläge zur Track-Führung zu geben.

Beim paarweisen Vergleich der Tracks der Flugobjekte wird von dem Luftlageinformations- und Verkehrsmanagementsystem eine "Octal Tree"-Sortierung um die jeweilige Track-Position durchgeführt. Der Vergleich aller Track-Positionen berücksichtigt dabei alle einkommenden Daten der Flugobjekte, d.h. neben den Radar-Daten insbesondere die kinematischen Daten der unbemannten Flugobjekte durch die Positionssensorgeräte 10, 11, 12, wie z.B. Geschwindigkeit, GNSS-Position, Beschleunigung, Kurs und Varianzen. Das Luftlageinformations- und Verkehrsmanagementsystem ermittelt daraus ein Erwartungsfenster 22, 23 für die zukünftige Bewegung, um die Risikoabschätzung zu ermöglichen.

Damit können bemannten und unbemannten Luftfahrzeugen jeweils typische Bewegungscharakteristika zugeordnet werden.

Wie Fig. 2 verdeutlicht, zeigen Kopfsymbole 25 zu den Tracks 21 die aktuelle Flugposition. Ein Zukunftsvektor 26 zeigt die Richtung und Geschwindigkeit enthält. Die zeitlich vergangenen Flugspuren der Flugbahn 21 werden in einem Luftlagebild 5 mit sogenannten History-Dots 27 beschrieben und so der vergangene Flugweg angezeigt.

Die dargestellten unbemannten Luftfahrzeuge werden auf der Darstellung des Luftlagebilds 5 mit Labels 28 versehen, die geometrische und barometrische Höhenangaben enthalten. Das Kopfsymbol 25 des Tracks des unbemannten Flugobjektes kann weiterhin Daten aus weiteren Sensoren des unbemannten Flugobjekts erhalten. Dies können z.B. der Ladezustand der Batterie, Steuerungs-Stati oder Telemetrie-Daten sein. Wartungsingenieure können auf einem zusätzlichen Analyse-Display Information der Mess- und Trackingqualität angezeigt bekommen

Wie in Fig. 4 dargestellt, erhält der Bediener in einem hier beispielhaft gezeigten Luftlagebild 5 ebenfalls Informationen und Warnhinweise über mögliche Kollisionen. Das Luftlageinformations- und Verkehrsmanagementsystem stellt ein solches Luftlagebild 5 mit Risiko-Abschätzung und Alarm-Funktionalität aller im Luftraum befindlichen Luftfahrzeuge bzw. Flugobjekte für den Piloten bspw. einer unbemannten Drohne 5 dar. Entsprechendes steht auch Operateuren, ggf. Mitarbeitern von Ordnungs- und Sicherheitsbehörden sowie ggf. den Fluglotsen zur Verfügung.

Die Luftlagebilder 5 können je nach jeweiligem Benutzer unterschiedlich aufbereitet sein und sich in der Darstellung unterscheiden.

Die Darstellung der aggregierten Daten auf der Anzeigeeinrichtung 6, 18, 19 kann vor dem Hintergrund wählbarer Karten erfolgen.

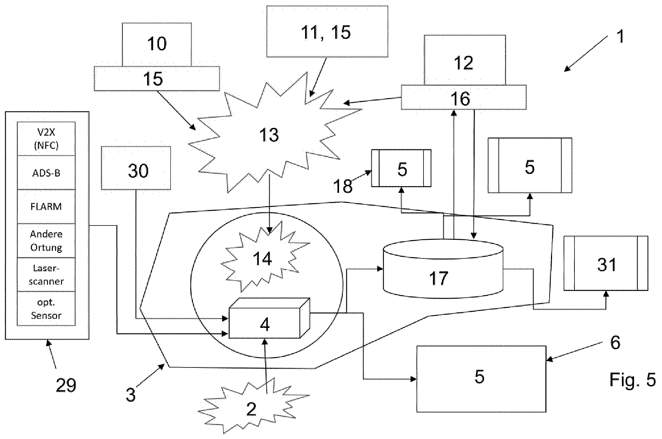

Wie in einer weiteren Ausführungsform des erfindungsgemäßen Luftlageinformations- und Verkehrsmanagementsystems 1 in Fig. 5 mit weiteren optionalen Merkmalen dargestellt, können zusätzlich zu den bereits beschriebenen Funktionalitäten auch andere (vorzugsweise optionale) Kommunikations- und Ortungstechniken 29 zum Einsatz kommen. Die Informationsübermittlung von den Positionssensorgeräten 10, 11, 12 erfolgt mittels Mobilfunkkommunikation. Optional können auch Satellitenkommunikation oder IoT-Kommunikation oder NFC-Kommunikation oder ADS-B oder FLARM zu Einsatz kommen, wie bereits erläutert.

Ebenso können andere Ortungstechniken, wie z.B. Laserscanner oder geographische Marker in virtuellen Karten in Verbindung mit optischen Sensoren im Triangulationsverfahren zur Erfassung unbemannter Luftfahrzeuge (Drohnen 15) mit integriert werden. Entsprechende Plots von Positionsdaten 20 und Tracks 21 können auch von Drohnendetektionssystemen 30 (DDS) für sogenannte non-kooperative Flugobjekte geliefert werden. So können einem Fluglotsen z.B. an einem Flughafen-Kontrollturm zusätzliche Informationen über Aktivitäten unbemannter Luftfahrzeuge bzw. Flugobjekte (wie bspw. Drohnen 15) in der direkten Umgebung von Flughäfen in unterschiedlichen kritischen Bereichen je nach Gefährdungsgrad dargestellt werden. Ebenso können kritische Infrastrukturen, Teststrecken, Industrie-Anlagen, Justizvollzugsanstalten, etc. damit bez. des Überfluges unbemannter Flugobjekte überwacht werden. Das so erstellte Luftlagebild 31 für eine Drohnendetektion zeigt dann bspw. räumlich-zeitliche Konflikte mit solchen definierten statischen, dynamischen und temporären Geo-Fences und Geo-Cages (Geo-Bereich). Dies ist möglich, weil das Luftlageinformations- und Verkehrsmanagementsystem über die Daten-Fusion mit Hilfe der Kovarianz-Intersektion die Beurteilung der Kooperativität unbemannter Flugobjekte (wie Drohnen 15) ermöglicht.

Für einen Eingriff kann das Luftlageinformations- und Verkehrsmanagementsystem bei Drohnen 15 mit einem Hook in-Device 11 über ein Steuersignal, das über einen gesonderten Datenkanal übertragen werden kann, das direkte Eingreifen in die Flugsteuerung einer Drohne 15 respektive eines unbemannten Luftfahrzeugs ermöglichen. Ebenso ist dies durch eine direkte Kommunikation mit einer Funkfernsteuerung der Drohne 15 am Boden möglich, wobei die Steuerung der Drohne 15 übernommen oder in diese eingegriffen wird. So kann beim Eindringen einer Drohne 15 oder eines unbemannten Flugobjekts in einen kritischen Überflugbereich ein Handover der Steuerung vom Piloten des unbemannten Flugobjektes auf das Luftlageinformations- und Verkehrsmanagementsystem übergehen und eine bspw. automatische Übernahme der Steuerung erfolgen bzw. dann eine Änderung des Segmentes der Flugroute vorgenommen werden.

Das erfindungsgemäß vorgestellte Luftlageinformations- und Verkehrsmanagementsystem stellt generell der Missions-Planung von unbemannten Flugobjekten Informationen zu Hindernissen, Flugverbotszonen, Wetterlagen und anderen autorisierten Flugmissionen zur Verfügung. Dies erlaubt dem Operateur oder Piloten, die Flug-Priorisierung und/oder die Planung von Steuerungs-Eingriffen in die Mission des unbemannten Luftfahrzeugs aufgrund genauerer Informationen zu treffen oder diese sogar (in Zukunft) zu automatisieren.

### Bezugszeichenliste:

- 1: Luftlageinformations- und Verkehrsmanagementsystem
- 2: ATM-Sensoren
- 3: Datennetzwerk
- 4: Tracking-Einrichtung
- 5: Luftlagebild
- 6: mit dem Datennetzwerk verbindbare Anzeigeeinrichtung

- 10: Positionssensorgerät als Hook-on Device
- 11: Positionssensorgerät als Hook-in Device
- 12: Positionssensorgerät als Carry-on Device
- 13: Funknetzwerk, insbesondere Mobilfunknetz
- 14: Bodenstation
- 15: Drohnen
- 16: Luftfahrzeug-Pilot
- 17: Darstellungsserver
- 18: mobiles Endgerät als Anzeigeeinrichtung
- 19: Terminal als Anzeigeeinrichtung
- 20: Positionsdaten
- 21: Flugbahn bzw. Track
- 22: Erwartungsfenster für Drohne
- 23: Erwartungsfenster für Flugzeug
- 24: Flugzeug
- 25: Kopfsymbol
- 26: Zukunftsvektor
- 27: History-Dots
- 28: Label
- 29: optionale Kommunikations- und Ortungstechniken
- 30: Drohnendetektionssysteme
- 31: Luftlagebild für Drohnendetektion

## Patentansprüche

1. Luftlageinformations- und Verkehrsmanagementsystem für unbemannte und bemannte Luftfahrzeuge, bei dem mittels ATM-Sensoren (2) des Luftlageinformations- und Verkehrsmanagementsystems (1) die Positionsdaten (20) von mittels ATM-Sensoren (2) erfassbaren Luftfahrzeugen erfasst, nachverfolgt und in einem Luftlagebild (5) dargestellt werden,
• wobei die ATM-Sensoren (2) mit einem durch eine Flugsicherung zur Verfügung gestellten Datennetzwerk (3) verbunden sind und die Positionsdaten (20) der erkannten Luftfahrzeuge in das Datennetzwerk (3) einstellen und
• wobei in dem Datennetzwerk (3) eine Tracking-Einrichtung (4) vorgesehen und dazu eingerichtet ist, die erfassten Positionsdaten (20) nachzuverfolgen und als Luftlagebild (5) aufzubereiten, so dass das Luftlagebild (5) an einer mit dem Datennetzwerk (3) verbindbaren Anzeigeeinrichtung (6, 18, 19) darstellbar ist,
• nicht mittels ATM-Sensoren (2) erfassbare Luftfahrzeuge mit einem portablen Positionssensorgerät (10, 11, 12) des Luftlageinformations- und Verkehrsmanagementsystems (1) ausgestattet sind, wobei das portable Positionssensorgerät (10, 11, 12) dazu einrichtet ist, aktuelle Positionsdaten (20) zu erfassen, und
• die Tracking-Einrichtung (4) dazu eingerichtet ist, die Positionsdaten der portablen Positionssensorgeräte (10, 11, 12) nachzuverfolgen und als Luftlagebild (5) aufzubereiten, so dass das Luftlagebild (5) an einer mit dem Datennetzwerk (3) verbindbaren Anzeigeeinrichtung (6, 18, 19) darstellbar ist,
wobei
• die ATM-Sensoren (2) nicht von dem Luftfahrzeug mitgeführte ortsfeste Sensoren sind, die Luftfahrzeuge im Luftraum erkennen und lokalisieren,
• das Positionssensorgerät (10, 11 12) eine Funkkommunikationseinrichtung aufweist, die dazu eingerichtet ist, mit einer an das Datennetzwerk (3) angeschlossenen Bodenstation (14) zu kommunizieren und die Positionsdaten (20) in das Datennetzwerk (3) einzustellen, wobei die Funckommunikationseinrichtung eine Mobilfunkkommunikationseinrichtung ist, die über ein als Mobilfunknetz ausgebildetes Funknetzwerk (13) mit der an das Datennetzwerk (3) angeschlossenen Bodenstation (14) kommuniziert und die Positionsdaten (20) der Positionsmessgeräte (10, 11, 12) in das Datennetzwerk (3) einstellt,
wobei die Tracking-Einrichtung (4) dazu eingerichtet ist, die Positionsdaten (20) der ATM-Sensoren (2) und die Positionsdaten (20) der portablen Positionssensorgeräte (10, 11, 12) zusammenzuführen und ein gemeinsames Luftlagebild (5) für durch ATM-Sensoren (2) erfassbare und durch ATM-Sensoren (2) nicht erfassbare Luftfahrzeuge zu erstellen, bei dem die Positionsdaten (20) der ATM-Sensoren (2) und der Positionssensorgeräte (10, 11, 12) als Plots dargestellt werden, in denen die zeitliche Abfolge der Positionsdaten (20) dargestellt werden, um hieraus eine Flugbahn (21) des Luftfahrzeugs zu extrahieren, **dadurch gekennzeichnet, dass**
die Tracking-Einrichtung (4) über einen erweiterten Interacting Multiple Model Kalman Filter verfügt, der unterschiedliche Bewegungsmodelle, Kurvenflug, Geradeausflug, Stillstand und Bewegungsdaten höherer Dynamik zur Modellierung der Bewegungen unbemannter Flugobjekte verwendet und dazu eingerichtet ist, in einer statistischen Risikoabschätzung die höhere Agilität von unbemannten Flugobjekten zu berücksichtigen und entsprechend angepasste Sicherheitsabstände zuordnen, die aus Erwartungsfenstern (22, 23) ermittelt werden, und
dass die Tracking-Einrichtung (4) dazu eingerichtet ist, bei Flugzeugen als trägeren bemannten Flugobjekten (24) längsbewegungsverzerrte Ellipsoide als Erwartungsfenster (23) und bei Drohnen als agilen unbemannten Flugobjekten (15) kreisförmige Ellipsoide als Erwartungsfenster (22) zu verwenden.

2. Luftlageinformations- und Verkehrsmanagementsystem nach Anspruch 1, **dadurch gekennzeichnet, dass** ein Luftlagebild (5) an einer Anzeigeeinrichtung (6, 18, 19) darstellbar ist, wobei die Anzeigeeinrichtung auf das Datennetzwerk (3) zugreift.

3. Luftlageinformations- und Verkehrsmanagementsystem nach Anspruch 2, **dadurch gekennzeichnet, dass** die Anzeigeeinrichtung (6, 18, 19) in das Datennetzwerk integriert ist oder sich durch Zugriff auf einen in dem Datennetzwerk integrierten Darstellungsserver (17) als Darstellungsclient mit dem Datennetz (3) verbindet.

4. Luftlageinformations- und Verkehrsmanagementsystem nach einem der vorhergehenden Ansprüche, **dadurch gekennzeichnet, dass** in dem Luftlagebild (5) eine oder mehrere der nachfolgenden Informationen darstellbar sind:
• Positionen mit Lageinformationen zu Operationen bemannter und/oder unbemannter Luftfahrzeuge;
• dynamisch aktualisierte, mit Labels (28) versehene Flugspuren, wobei Punkte und/oder unterbrochene Striche (27) in den Flugspuren den vergangenen Flugweg repräsentieren, ein Kopfsymbol (25) die aktuelle Flugposition darstellt und ein durchgezogener Strich als Zukunftsvektor (26) die aktuelle Richtung und Geschwindigkeit repräsentiert;
• auf der Basis des erstellten Luftlagebildes (5) ermittelte räumlich-zeitliche Konflikte mit statischen, dynamischen und temporären Geo-Bereichen;
• auf der Basis des erstellten Luftlagebildes (5) ermittelte räumlich-zeitliche Konflikte zwischen unbemannten Luftfahrzeugen sowie zwischen bemannten und unbemannten Luftfahrzeugen;
• frei wählbare Hintergrundkarte;
• Kontrollpositionen mit Lageinformationen zu Operationen unbemannter Flugobjekte;

5. Luftlageinformations- und Verkehrsmanagementsystem nach einem der vorhergehenden Ansprüche, **dadurch gekennzeichnet, dass** die in das Datennetzwerk (3) eingestellten Positionsdaten (20) weitere Surveillance-Daten zu dem Typ und/oder Status des Luftfahrzeugs umfassen.

6. Luftlageinformations- und Verkehrsmanagementsystem nach einem der vorhergehenden Ansprüche, **dadurch gekennzeichnet, dass** es sich bei den nicht mittels ATM-Sensoren (2) erfassbaren Luftfahrzeugen um unbemannte Luftfahrzeuge handelt, bei denen kein Pilot mitfliegt, oder um bemannte Luftfahrzeuge in unteren Lufträumen, die durch einen Piloten gesteuert werden, aber durch ATM-Sensoren (2) nicht systematisch erfassbar sind.

7. Luftlageinformations- und Verkehrsmanagementsystem nach einem der vorhergehenden Ansprüche, **dadurch gekennzeichnet, dass** zumindest ein Teil der nicht mittels ATM-Sensoren (2) erfassbaren Luftfahrzeuge als Positionssensorgerät (10) ein autark arbeitendes Gerät mit einer eigenen Energieversorgung aufweist, das mit dem Luftfahrzeug eine bauliche Einheit bildet, aber kommunikationstechnisch mit dem Luftfahrzeug nicht verbunden ist.

8. Luftlageinformations- und Verkehrsmanagementsystem nach einem der vorhergehenden Ansprüche, **dadurch gekennzeichnet, dass** zumindest ein Teil der nicht mittels ATM-Sensoren (2) erfassbaren Luftfahrzeuge als Positionssensorgerät (12) ein autark arbeitendes Gerät mit einer eigenen Energieversorgung ist, das als Applikation in ein mobiles Endgerät mit einer Prozessor- und Kommunikationseinheit integriert und auf dem mobilen Endgerät ausführbar ist.

9. Luftlageinformations- und Verkehrsmanagementsystem nach einem der vorhergehenden Ansprüche, **dadurch gekennzeichnet, dass** zumindest ein Teil der nicht mittels ATM-Sensoren (2) erfassbaren Luftfahrzeuge als Positionssensorgerät (11) ein elektrisch und/oder elektronisch an das Bordnetz des Luftfahrzeugs anschließbares Gerät ist, das mit dessen Steuerungselektronik und/oder Energieversorgung verbindbar ist.

10. Luftlageinformations- und Verkehrsmanagementsystem nach einem der vorhergehenden Ansprüche, **dadurch gekennzeichnet, dass** die Funkkommunikationseinrichtung eine Mobilfunk- oder Satellitenkommunikationseinrichtung ist.

11. Luftlageinformations- und Verkehrsmanagementsystem nach einem der vorhergehenden Ansprüche, **dadurch gekennzeichnet, dass** die Funkkommunikationseinrichtung eine bidirektionale Kommunikation mit einer Hinkommunikation von dem Positionsmessgerät (10, 11, 12) in das Datennetzwert (3) und einer Rückkommunikation aus dem Datennetzwerk (3) an das Positionssensorgerät (10, 11, 12) erlaubt.

12. Luftlageinformations- und Verkehrsmanagementsystem nach Anspruch 11, **dadurch gekennzeichnet, dass** bei einer Rückkommunikation aus dem Datennetzwerk (3) an die Positionssensorgeräte (10, 11, 12) auch ein Eingriff in die Flugsteuerung vorgesehen ist.

13. Luftlageinformations- und Verkehrsmanagementsystem nach einem der vorhergehenden Ansprüche, **dadurch gekennzeichnet, dass** das Positionssensorgerät (10, 11, 12) die Positionsdaten (20) über ein globales Navigationssatellitensystem ermittelt.

14. Luftlageinformations- und Verkehrsmanagementsystem nach einem der vorhergehenden Ansprüche, **dadurch gekennzeichnet, dass** das Positionssensorgerät (10, 11, 12) die Positionsdaten (20) aus Daten von an das Bordnetz des Luftfahrzeugs angeschlossenen Sensoren ermittelt.

## Claims

1. Air position information and traffic management system for unmanned and manned aircraft, in which the position data of aircraft that are detectable by **ATM** sensors (2) are detected, tracked, and represented in an air position image (5) by means of **ATM** sensors (2) of the air position information and traffic management system (1),
• wherein the **ATM** sensors (2) are connected to a data network (3) provided by an air traffic control system and upload the position data (20) of the recognized aircraft into the data network (3) and
• wherein provided in the data network (3) is a tracking device (4) that is configured to track the recognized position data (20) and to prepare it as an air position image (5), so that the air position image (5) may be represented on a display device (6, 18, 19) that is connectable to the data network (3),
• wherein aircraft that are not detectable by means of **ATM** sensors (2) are equipped with a portable position sensor device (10, 11, 12) of the air position information and traffic management system (1), the portable position sensor device (10, 11, 12) being configured to detect current position data (20),
• wherein the tracking device (4) is configured to track the position data of the portable position sensor devices (10, 11, 12) and to prepare it as an air position image (5), so that the air position image (5) may be represented on a display device (5) that is connectable to the data network (3),
wherein
• the **ATM** sensors (2) are stationary sensors that are not carried on board the aircraft, and that recognize and locate aircraft in the airspace,
• the position sensor device (10, 11, 12) has a radio communication device that is configured to communicate with a ground station (14) that is connected to the data network (3) and to upload the position data (20) into the data network (3), said radio communication device being a mobile radio communication device that is configured to communicate, via a radio network (13) that is designed as a mobile radio communications network, with the ground station (14) that is connected to the data network (3) and to upload the position data (2) of the position sensor devices (10, 11, 12) into the data network (3),
wherein the tracking device (4) is configured to combine the position data (20) of the ATM sensors (2) and the position data (20) of the portable position sensor devices (10, 11, 12), and to create a shared air position image (5) for aircraft that are detectable by ATM sensors (2) and aircraft that are not detectable by ATM sensors (2), wherein in said air position image (5) the position data of the ATM sensors (2) and of the position sensor devices (10, 11, 12) are depicted as plots representing the time sequence of the position data (20), in order to extract therefrom the flight trajectory of the aircraft, **characterized in that**
said tracking device (4) comprises an enhanced Interacting Multiple Model Kalman Filter that uses different motion models, turning flight, straight flight, standstill, and higher-dynamics motion data for modeling the movements of unmanned flying objects and said tracking device (4) is configured to take into account the greater agility of drones and unmanned flying objects in general in a statistical risk assessment and assigns safety clearances that are determined from expectation windows (22, 23), and
that the tracking device (4) is configured to use ellipsoids with a longitudinal distortion along the movement direction for the expectation windows (23) of the aircraft as inert manned flying objects (14), and to use circular ellipsoids for the expectation windows (22) of the drones as agile unmanned flying objects (15).

2. Air position information and traffic management system according to claim 1, **characterized by that** an air position image (5) may be represented on a display device (6, 18, 19), the display device accessing the data network (3).

3. Air position information and traffic management system according to claim 2, **characterized by that** the display device (6, 18, 19) is integrated into the data network (3), or is connected to the data network (3) by accessing a presentation server (17), integrated into the data network (3) as a presentation client.

4. Air position information and traffic management system according to any of the preceding claims, **characterized by that** one or more of the following pieces of information may be represented in the air position image (5):
• positions with position information concerning operations of manned and/or unmanned aircraft;
• dynamically updated flight tracks provided with labels (28), wherein dots and/or dashed lines (27) in the flight tracks represent the past flight path, an arrowhead symbol (28) represents the current flight position, and a solid line as a future vector (26) represents the current direction and speed;
• spatial-temporal conflicts with static, dynamic, and temporary georegions that are determined based on the created air position image;
• spatial-temporal conflicts between unmanned aircraft as well as between manned and unmanned aircraft that are determined based on the created air position image;
• a freely selectable background map;
• control positions with position information concerning operations of unmanned flying objects.

5. Air position information and traffic management system according to any of the preceding claims, **characterized by that** the position data (20) uploaded into the data network (3) includes further surveillance data concerning the type and/or status of the aircraft.

6. Air position information and traffic management system according to any of the preceding claims, **characterized by that** the aircraft which are not detectable by means of ATM sensors (2) are unmanned aircraft in which no pilot is on board, or manned aircraft in lower airspaces which are controlled by a pilot but are not detectable by ATM sensors (2) systematically.

7. Air position information and traffic management system according to any of the preceding claims, **characterized by that** at least part of the aircraft that are not detectable by means of ATM sensors (2) comprise, as a position sensor device (10), an autonomously operating device with its own power supply, which together with the aircraft forms a structural unit but is not in communication connection with the aircraft.

8. Air position information and traffic management system according to any of the preceding claims, **characterized by that** at least part of the aircraft that are not detectable by means of ATM sensors (2) comprise, as a position sensor device (12), an autonomously operating device with its own power supply, and which, as an application integrated into a mobile terminal together with a processor and communication unit, may be executed on the mobile terminal.

9. Air position information and traffic management system according to any of the preceding claims, **characterized by that** at least part of the aircraft that are not detectable by means of ATM sensors (2) comprise, as a position sensor device (11), a device that is electrically and/or electronically connectable to the onboard electrical system of the aircraft, and that is connectable to the control electronics system and/or power supply thereof.

10. Air position information and traffic management system according to any of the preceding claims, **characterized by that** the radio communication device is a mobile or satellite radio communication device.

11. Air position information and traffic management system according to any of the preceding claims, **characterized by that** the radio communication device allows bidirectional communication, with forward communication from the position measuring device (10, 11, 12) into the data network (3), and reverse communication from the data network (3) to the position sensor device (10, 11, 12).

12. Air position information and traffic management system according to claim 11, **characterized by that** in a reverse communication from the data network (3) to the position sensor devices (10, 11, 12), an intervention in the flight control is also provided.

13. Air position information and traffic management system according to any of the preceding claims, **characterized by that** the position sensor device (10, 11, 12) determines the position data (20) via a global navigation satellite system.

14. Air position information and traffic management system according to any of the preceding claims, **characterized by that** the position sensor device (10, 11, 12) determines the position data (20) from data of sensors that are connected to the onboard electrical system of the aircraft.

## Revendications

1. Système d'information sur la position aérienne et de gestion du trafic pour les aéronefs avec ou sans pilote, dans lequel les données de position des aéronefs détectables par les capteurs **ATM** (2) sont détectées, suivies et représentées dans une image de position aérienne (5) au moyen des capteurs **ATM** (2) du système d'information sur la position aérienne et de gestion du trafic (1),
• dans lequel les capteurs **ATM** (2) sont connectés à un réseau de données (3) fourni par un système de contrôle du trafic aérien et téléchargent les données de position (20) de l'aéronef reconnu dans le réseau de données (3) et
• dans lequel le réseau de données (3) comprend un dispositif de suivi (4) configuré pour suivre les données de position reconnues (20) et les préparer en tant qu'image de position aérienne (5), de sorte que l'image de position aérienne (5) puisse être représentée sur un dispositif d'affichage (6, 18, 19) pouvant être connecté au réseau de données (3),
• dans lequel les aéronefs qui ne sont pas détectables au moyen des capteurs **ATM** (2) sont équipés d'un dispositif de capteur de position portable (10, 11, 12) du système d'information sur la position aérienne et de gestion du trafic (1), le dispositif de capteur de position portable (10, 11, 12) étant configuré pour détecter les données de position actuelle (20),
• dans lequel le dispositif de suivi (4) est configuré pour suivre les données de position des dispositifs de capteurs de position portables (10, 11, 12) et pour les préparer en tant qu'image de position aérienne (5), de sorte que l'image de position aérienne (5) puisse être représentée sur un dispositif d'affichage (5) pouvant être connecté au réseau de données (3),
dans lequel
• les capteurs ATM (2) sont des capteurs stationnaires qui ne sont pas embarqués à bord de l'aéronef et qui reconnaissent et localisent les aéronefs dans l'espace aérien,
• le dispositif de capteur de position (10, 11, 12) possède un dispositif de communication radio configuré pour communiquer avec une station au sol (14) connectée au réseau de données (3) et pour télécharger les données de position (20) dans le réseau de données (3), ledit dispositif de communication radio étant un dispositif de communication radio mobile configuré pour communiquer, via un réseau radio (13) conçu comme un réseau de communication radio mobile, avec la station au sol (14) qui est connectée au réseau de données (3) et pour télécharger les données de position (2) des dispositifs de détection de position (10, 11, 12) dans le réseau de données (3),
dans lequel le dispositif de suivi (4) est configuré pour combiner les données de position (20) des capteurs ATM (2) et les données de position (20) des dispositifs de capteurs de position portables (10, 11, 12), et pour créer une image de position aérienne partagée (5) pour les aéronefs qui sont détectables par les capteurs ATM (2) et les aéronefs qui ne sont pas détectables par les capteurs ATM (2), dans laquelle, dans ladite image de position aérienne (5), les données de position des capteurs ATM (2) et des dispositifs de capteurs de position (10, 11, 12) sont représentées sous forme de tracés représentant la séquence temporelle des données de position (20), afin d'en extraire la trajectoire de vol de l'aéronef, **caractérisé en ce que**
ledit dispositif de suivi (4) comprend un filtre de Kalman amélioré à modèles multiples en interaction qui utilise différents modèles de mouvement, le vol en virage, le vol en ligne droite, l'arrêt et des données de mouvement à dynamique plus élevée pour modéliser les mouvements des objets volants sans pilote et ledit dispositif de suivi (4) est configuré pour prendre en compte la plus grande agilité des drones et des objets volants sans pilote en général dans une évaluation statistique des risques et attribue des distances de sécurité qui sont déterminées à partir des fenêtres d'attente (22, 23), et
ce que le dispositif de suivi (4) est configuré pour utiliser des ellipsoïdes avec une distorsion longitudinale le long de la direction de mouvement pour les fenêtres d'attente (23) des aéronefs en tant qu'objets volants pilotés inertes (14), et pour utiliser des ellipsoïdes circulaires pour les fenêtres d'attente (22) des drones en tant qu'objets volants non pilotés agiles (15).

2. Système d'information sur la position aérienne et de gestion du trafic selon la revendication 1, **caractérisé en ce qu'**une image de position aérienne (5) peut être représentée sur un dispositif d'affichage (6, 18, 19), le dispositif d'affichage accédant au réseau de données (3).

3. Système d'information sur la position aérienne et de gestion du trafic selon la revendication 2, **caractérisé en ce que** le dispositif d'affichage (6, 18, 19) est intégré au réseau de données (3), ou est connecté au réseau de données (3) en accédant à un serveur de présentation (17), intégré au réseau de données (3) en tant que client de présentation.

4. Système d'information sur les positions aériennes et de gestion du trafic selon l'une quelconque des revendications précédentes, **caractérisé en ce qu'**un ou plusieurs des éléments d'information suivants peuvent être représentés dans l'image de position aérienne (5) :
• des positions dotées d'informations de position concernant les opérations des aéronefs pilotés et/ou non pilotés ;
• les trajectoires de vol mises à jour dynamiquement et dotées d'étiquettes (28), dans lesquelles les points et/ou les lignes en pointillé (27) des trajectoires de vol représentent la trajectoire de vol passée, un symbole en forme de flèche (28) représente la position de vol actuelle et une ligne continue en tant que vecteur futur (26) représente la direction et la vitesse actuelles ;
• les conflits spatio-temporels avec des géorégions statiques, dynamiques et temporaires qui sont déterminés sur la base de l'image de position aérienne créée ;
• les conflits spatio-temporels entre les aéronefs sans pilote ainsi qu'entre les aéronefs avec pilote et les aéronefs sans pilote qui sont déterminés sur la base de l'image de position aérienne créée ;
• une carte d'arrière-plan librement sélectionnable ;
• les positions de contrôle avec les informations de position concernant les opérations des objets volants non habités.

5. Système d'information sur la position aérienne et de gestion du trafic selon l'une quelconque des revendications précédentes, **caractérisé en ce que** les données de position (20) téléchargées dans le réseau de données (3) comprennent d'autres données de surveillance concernant le type et/ou le statut de l'aéronef.

6. Système d'information sur la position aérienne et de gestion du trafic selon l'une quelconque des revendications précédentes, **caractérisé en ce que** les aéronefs qui ne sont pas détectables au moyen des capteurs ATM (2) sont des aéronefs non habités dans lesquels aucun pilote n'est à bord, ou des aéronefs habités dans des espaces aériens inférieurs qui sont contrôlés par un pilote mais qui ne sont pas détectables par les capteurs ATM (2) de manière systématique.

7. Système d'information sur la position aérienne et de gestion du trafic selon l'une quelconque des revendications précédentes, **caractérisé en ce qu'**au moins une partie des aéronefs qui ne sont pas détectables au moyen des capteurs ATM (2) comprennent, en tant que dispositif de capteur de position (10), un dispositif fonctionnant de manière autonome avec sa propre alimentation en énergie, qui forme avec l'aéronef une unité structurelle mais n'est pas en liaison de communication avec l'aéronef.

8. Système d'information sur la position aérienne et de gestion du trafic selon l'une quelconque des revendications précédentes, **caractérisé en ce qu'**au moins une partie de l'aéronef qui n'est pas détectable au moyen des capteurs ATM (2) comprend, en tant que dispositif de capteur de position (12), un dispositif fonctionnant de manière autonome avec sa propre alimentation électrique, et qui, en tant qu'application intégrée dans un terminal mobile avec un processeur et une unité de communication, peut être exécuté sur le terminal mobile.

9. Système d'information sur la position aérienne et de gestion du trafic selon l'une quelconque des revendications précédentes, **caractérisé en ce qu'**au moins une partie de l'aéronef qui n'est pas détectable au moyen des capteurs ATM (2) comprend, en tant que dispositif capteur de position (11), un dispositif pouvant être connecté électriquement et/ou électroniquement au système électrique de bord de l'aéronef, et pouvant être connecté au système électronique de commande et/ou à l'alimentation électrique de celui-ci.

10. Système d'information sur la position aérienne et de gestion du trafic selon l'une quelconque des revendications précédentes, **caractérisé en ce que** le dispositif de radiocommunication est un dispositif de radiocommunication mobile ou par satellite.

11. Système d'information sur la position de l'air et de gestion du trafic selon l'une quelconque des revendications précédentes, **caractérisé en ce que** le dispositif de communication radio permet une communication bidirectionnelle, avec une communication aller du dispositif de mesure de la position (10, 11, 12) vers le réseau de données (3), et une communication retour du réseau de données (3) vers le dispositif de détection de la position (10, 11, 12).

12. Système d'information sur la position aérienne et de gestion du trafic selon la revendication 11, **caractérisé en ce que** dans une communication inverse du réseau de données (3) vers les dispositifs de mesure de la position (10, 11, 12), une intervention dans la commande de vol est également prévue.

13. Système d'information sur la position aérienne et de gestion du trafic selon l'une quelconque des revendications précédentes, **caractérisé en ce que** le dispositif de capteur de position (10, 11, 12) détermine les données de position (20) par l'intermédiaire d'un système mondial de navigation par satellite.

14. Système d'information sur la position aérienne et de gestion du trafic selon l'une quelconque des revendications précédentes, **caractérisé en ce que** le dispositif de capteur de position (10, 11, 12) détermine les données de position (20) à partir des données de capteurs qui sont connectés au système électrique de bord de l'aéronef.
